# EUROPEAN PATENT SPECIFICATION

(11) **EP 1 715 619 B1**
(45) Date of publication and mention of the grant of the patent: **01.10.2008**
(21) Application number: 05077769.7
(22) Date of filing: 05.12.2005
(51) Int. Cl.: H04L 12/24

(54) **Generating MIBs from WMI classes**
MIB-Generierung aus WMI Klassen
Génération d'une MIB à partir de classes WMI

(30) Priority: 22.04.2005 GB 0508095
(43) Date of publication of application: 25.10.2006
(73) Proprietor: NRC International Inc., Dayton, Ohio 45479 (US)
(72) Inventor: Savage, John Gerad, Tayport Fife DD6 9BW (GB)
(74) Representative: MacLeod, Roderick William

(56) References cited:
- EP-A- 1 396 960
- US-A- 6 009 431
- US-A1- 2001 004 745
- US-A1- 2003 115 197
- US-A1- 2003 135 648
- US-A1- 2003 177 477
- US-B1- 6 317 748
- MACHIRAJU V ET AL: "Towards Generic Application Auto-discovery" IEEE, 10 April 2000 (2000-04-10), pages 75-88, XP010376668
- PILZ A ET AL: "Network Management Information Models" AEU INTERNATIONAL JOURNAL OF ELECTRONICS AND COMMUNICATIONS, ELSEVIER, JENA, DE, vol. 58, no. 3, 2004, pages 165-171, XP004959779 ISSN: 1434-8411
- SUN MICROSYSTEMS: "Java Dynamic Management Kit 5.1" GETTING STARTED GUIDE, [Online] 4 June 2004 (2004-06-04), pages 1-82, XP002378444 Santa Clara Retrieved from the Internet: URL:http://java.sun.com/products/jdmk/docs /JDMK51START.pdf> [retrieved on 2006-06-25]

## Description

### Field of the Invention

The present invention relates to network management and in particular, but in no way limited to, network management for self-service devices and applications. The present invention is particularly related to generation of management information bases (MIBs) from windows management instrumentation (WMI) classes.

### Background

In a communications network comprising routers, switches, self-service equipment, web-servers or any other nodes there is a need for network management of both physical devices and software applications. For example the nodes may require reconfiguration, maintenance, software upgrade or repair. It is also required to plan and instigate overall network design and topology for example to increase network capacity or provide enhanced quality of service over particular routes. These types of tasks are typically carried out by network management staff and automated systems making use of various tools. Those tools need to access management information for example about the status of network nodes and software applications and various protocols are in current use for facilitating access to such management information. Some of these protocols are object-oriented such as windows management instrumentation (WMI) whilst others use a tree-based architecture, for example simple network management protocol (SNMP).

A need therefore arises to allow management information provided by an object-oriented protocol to be mapped to a form compatible with a protocol that uses a tree-based architecture. In addition it is desired to achieve this in a manner independent of domain knowledge of the management information itself. That is, for example, without knowledge of whether the management information is about software applications or physical devices.

The present invention is particularly concerned with self-service nodes such as automated teller machines (ATMs), automated kiosks and the like as well as software applications for controlling such nodes. In the field of self-service devices and applications WMI has been adopted by some providers as the standard management protocol for a range of self-service devices and applications. There is therefore a need, particularly in the self-service field, to facilitate mapping between WMI and SNMP so that existing SNMP based network management systems can be used to remotely manage self-service devices and applications. However, the invention is not limited to the field of network management of such self-service nodes and software applications; it has broader application to network management in general.

Background information about the two protocols mentioned above, WMI and SNMP, is now given.

### SNMP

SNMP is a protocol for managing nodes on an internet protocol (IP) network. It is defined in various Internet Engineering Task Force (IETF) request for comments (RFCs). This protocol is used for example to enable network administrators to manage network performance, carry out network maintenance and fault resolution as well as to plan changes to the network. At present there are three versions of SNMP (SNMPv1, SNMPv2 and SNMPv3) and the present invention is arranged to operate with any of these versions and with future versions where appropriate.

Three types of component are provided in an SNMP managed network these being managed devices, agents and network management systems (NMSs). A managed device is a network node (also referred to as a network element) that comprises an SNMP agent and which is in a managed network. Examples of managed devices include ATMs, automated kiosks, routers, switches, bridges, printers and hard disk drives. A managed device can also be a software application residing on a network node or element.

An SNMP agent is a software module, provided on a managed device and arranged to access management information from the device and translate that into SNMP format. That SNMP management information can then be made available to a network management system using SNMP. In turn, the network management systems use management information from the managed devices for monitoring and control purposes.

SNMP comprises four basic commands for monitoring and controlling managed devices. These are "read", "write", "trap" (referred to as "inform" in some versions of SNMP) and "traversal" operations. The read command enables an NMS to find out the current value of variables maintained by managed devices. The write command enables the values of variables at the managed devices to be changed by an NMS. The trap command is used by managed devices to send information about events to the NMS asynchronously. Traversal operations are used by NMSs to find out which variables a managed device has and to sequentially gather information in variable tables, such as routing table.

In SNMP managed networks, management information is stored in management information bases (MIBs) which have a tree-based architecture. Each MIB represents managed objects identified by object identifiers such that a MIB is an example of an OID tree structure (see below for definition of OID structure).

Part of the power of the SNMP system is that although static information can be stored in the MIBs, SNMP also provides dynamic information about the managed system. When a request for management information arrives from a NMS to the MIB queries are sent out to the relevant SNMP agents where appropriate. Those agents then identify the latest management information and return that to the NMS.

### WMI

WMI is based upon an industry standard for systems management known as the Common Information Model. The CIM (pronounced 'sim') standard is published by the Distributed Management Task Force (DMTF) consortium and defines:
*"...a common data model of an implementation-neutral schema for describing overall management information in a networklenterprise environment"*

The CIM is defined by a schema (class/object model and meta-model) and, because the CIM is object oriented, vendor-dependent extensions do not break compatibility with the core schemas defined by the DMTF. Vendor-dependent extensions extend the definitions to allow effective management of systems while retaining vendor-independent management of heterogeneous systems.

Microsoft is a member of the DMTF board and the CIM standard has been incorporated as the core of the management infrastructure for the Windows operating system family, including Windows XP. Microsoft's name for their implementation of the CIM standard is Windows Management Instrumentation (WMI). WMI support is embedded throughout the Windows operating system, in device drivers and core operating system areas, managing many aspects of hardware and software. WMI effectively defines an extension schema for the Windows operating systems.

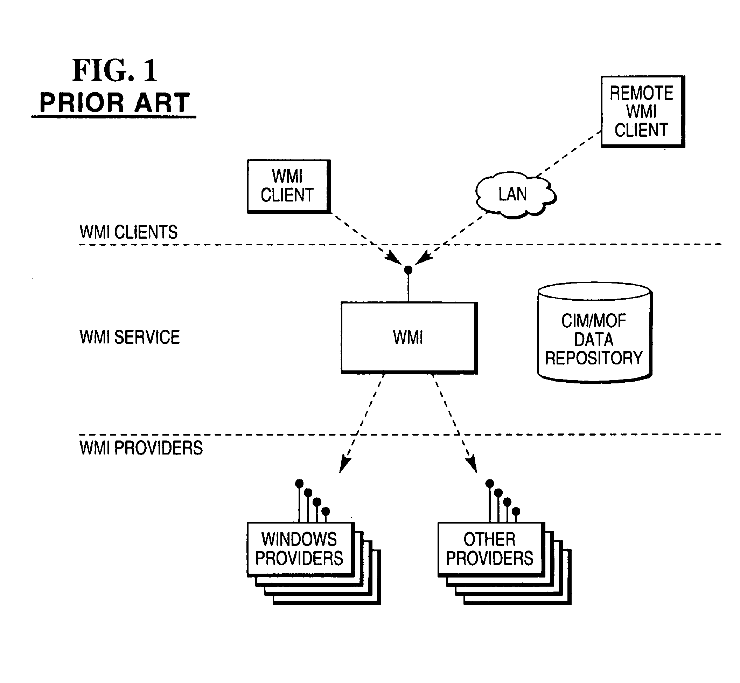

The basic architecture of the WMI system is shown in Figure 1.

WMI Clients are applications that use WMI to access management functionality, e.g., an SST field engineering application or management agent. Management functionality is implemented in WMI Provider plugins, some provided with the operating system and others provided by hardware or software vendors.

The Windows WMI Service provides a COM interface to allow WMI Clients to access the functionality provided ultimately by the WMI Providers. In other words the WMI Service is a broker providing access to classes, objects, methods, attributes and events implemented by the WMI Providers. The COM interface is suitable for use from scripting environments and supports an SQL-style query interface (WQL) to discover manageable system elements. Rich integration and support is provided by the .NET environment.

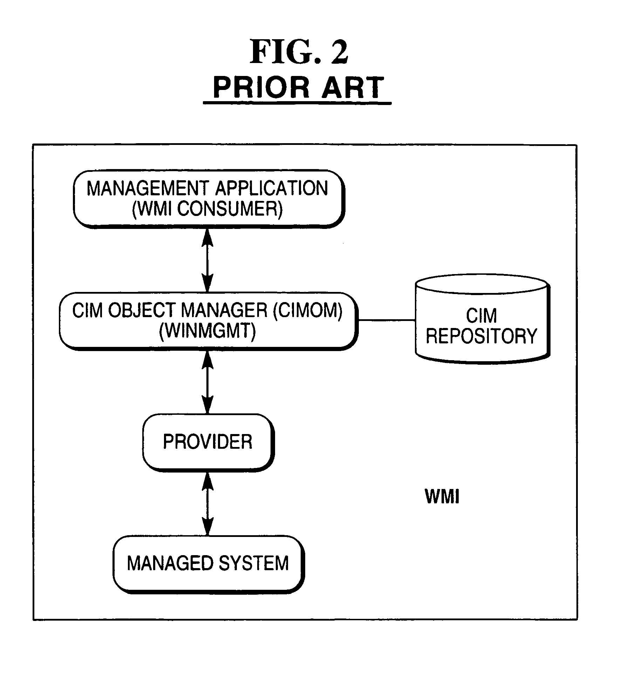

Figure 2 shows the three-layer model WMI uses, which consists of providers, the WMI Manager (a.k.a. CIMOM - the CIM Object Manager), and consumers of WMI information.

Working from the lowest level upward, the first tier is the provider. Simply put, a provider is an intermediate agent between the system to be managed (for example, operating system, service, application, device driver, and so on) and the CIM object manager. The job of a provider is to extract management information from the underlying data source using whatever interfaces that software presents for management. The management information and interfaces are then mapped by the provider into the object classes that WMI presents to WMI consumers/clients. Moving forward, new and updated managed systems will use providers as a direct way to expose management APls without significant intermediate conversions.

Next is CIMOM, otherwise known as the WMI Manager, which has its own storage repository and acts as a broker for object requests. The WMI Manager and its repository are represented on the system by the system service called WinMgmt. Providers plug into the WMI Manager via a published set of COM interfaces. The WMI Manager keeps track of what classes are available (their definitions are stored in the repository) and what provider is responsible for supplying instances of those classes. When a request for management information comes from a WMI consumer to the WMI Manager, it evaluates the request, identifies which provider has the information, requests it from the provider, and upon getting it returns the data to the consumer. The consumer only needs to ask for the information it wants but at no time needs to know the exact source of it or any details of how it is extracted from the underlying API. It should be noted that static data can be stored in the repository and retrieved without a provider, but the real power of the WMI system is that it supplies *dynamic* information about the managed system, and this is done entirely through providers.

Finally, there are consumers of WMI data. These can be local supervisor functions, (remote) management applications or third-party applications or scripts. These consumers, as previously noted, only need to know about the classes of the objects about which they wish to get information. The details of where the information comes from and how it is actually obtained are hidden and not relevant. In this way, an application or script can write to one common API, WMI, and get a wealth of information about the computer, operating system, applications, and devices.

US 2003/177477 A1, 18.9.2003, "Java to NSMP MIB mapping", discloses a tool comprising a CIM front-end for loading class information, a mapping engine and a series of back-ends for generating MIBS and a XML mapping description for a each MIB.

In summary, based on industry standards and endorsed by the DMTF, WMI provides a rich and extensible object model that allows computer systems to be managed in a consistent, scriptable way, either locally or remotely. Most core operating system information and services are already instrumented as part of the basic WMI system that comes with XP.

### Summary of the Invention

The present invention is concerned with translating the object relationship model used in WMI to a tree-based structure (such as an OID tree structure) that will expose all functionality to a remote SNMP management system. A set of pre-specified WMI qualifiers is provided such that a developer, when creating or adapting WMI class definitions, adds those pre-specified WMI qualifiers as required. The present invention is defined by system claim 1, method claim 10. Embodiments of the invention are defined by the dependent claims.

### Brief Description of the Drawings

These and other aspects of the invention will be apparent from the following specific description, given by way of example, with reference to the accompanying drawings, in which:
Figure 1 shows the architecture of the WMI system according to the prior art;
Figure 2 shows the three layer model used by WMI according to the prior art;
Figure 3a is a schematic diagram of an SNMP network management system arranged to remotely manage WMI managed systems;
Figure 3b is a schematic diagram of a WMI managed system of Figure 3a in more detail;
Figure 3c is a schematic diagram of the SNMP network management system of Figure 3a showing an associated management tool;
Figure 3d is a schematic diagram of a MIB generator tool;
Figure 4 is a flow diagram of a method carried out by a MIB generator tool.

### Description of an Embodiment

### OID structure

An OID (object identifier) is a string of integers that acts as a name for an object in an object oriented protocol. Each OID is a globally unique ordered list of integers and these are allocated in a hierarchical manner. OIDs are defined in ITU-T recommendation X.208 (ASN.1). Once an organization obtains a valid OID from an OID registry that organization is able to assign further OIDs provided those all stem from the root OID with which it was issued. That is each newly assigned OID must start off with the integers of the root OID that was issued. The term "OID structure" is thus used herein to refer to a tree structure in which each node of the tree comprises an object with an object identifier as described above.

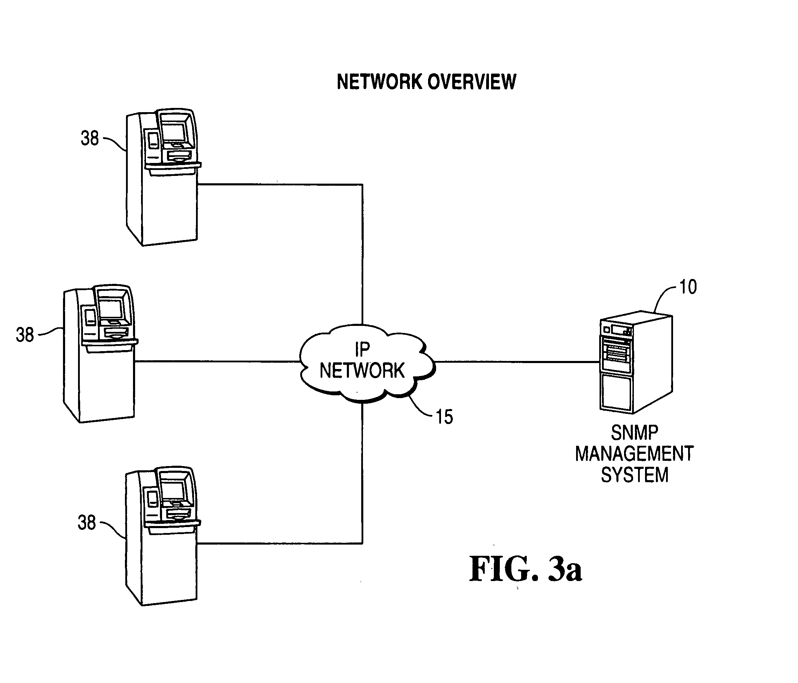

Figure 3a is a high level network overview diagram. It shows an internet protocol network 15 (or any other suitable type of communications network) connecting self-service devices such as ATMs 38 and an SNMP Management System 10. The SNMP management system is arranged to enable management of the ATMs even though they expose management information via the WMI class infrastructure. Although this example is discussed with reference to self-service devices the invention is applicable to any managed devices which expose management information via WMI or equivalent classes.

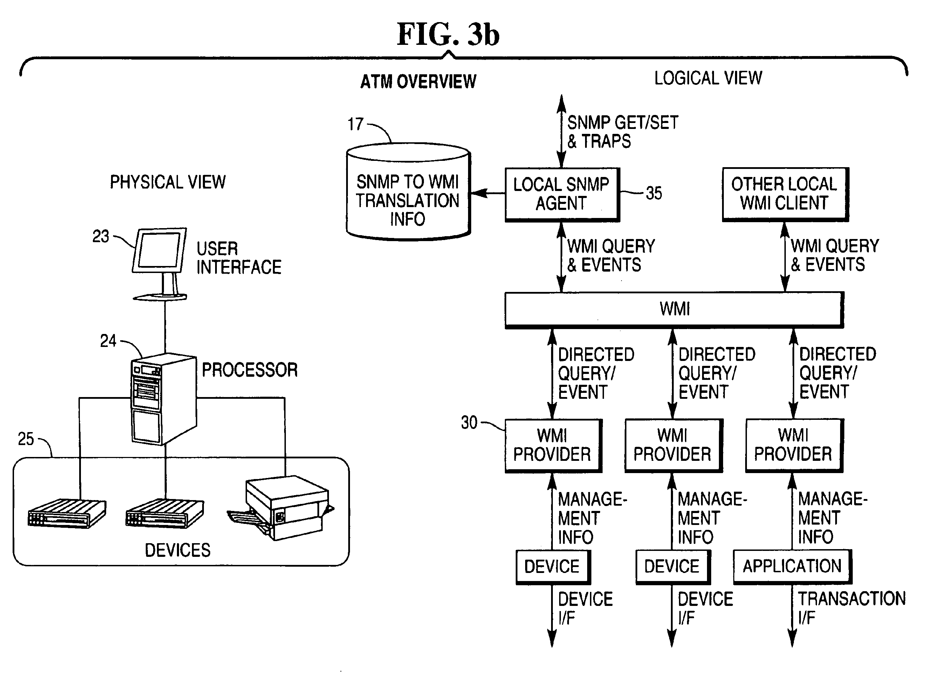

Figure 3b shows more detail of an ATM 38 of Figure 3a. A physical view of one such ATM is illustrated comprising a user interface 23 and a processor 24. The processor 24 comprises or is associated with devices 25 to be managed such a printer and processor cards. The logical view of the ATM shows that each ATM 38 comprises a local SNMP agent 35 which sends and receives SNMP commands in order to communicate with the SNMP management system 10 of Figure 3a. This agent 35 accesses SNMP to WMI translation information 17 (which is formed by a MIB generator tool as described below). The ATM also comprises WMI providers 30 for the devices 25 to be managed such that management information is retrieved from those devices 25 and exposed via WMI as known in the art. A CIM object manager (shown as the WMI layer in Figure 3b) keeps track of what WMI classes are available and directs class queries to the correct providers.

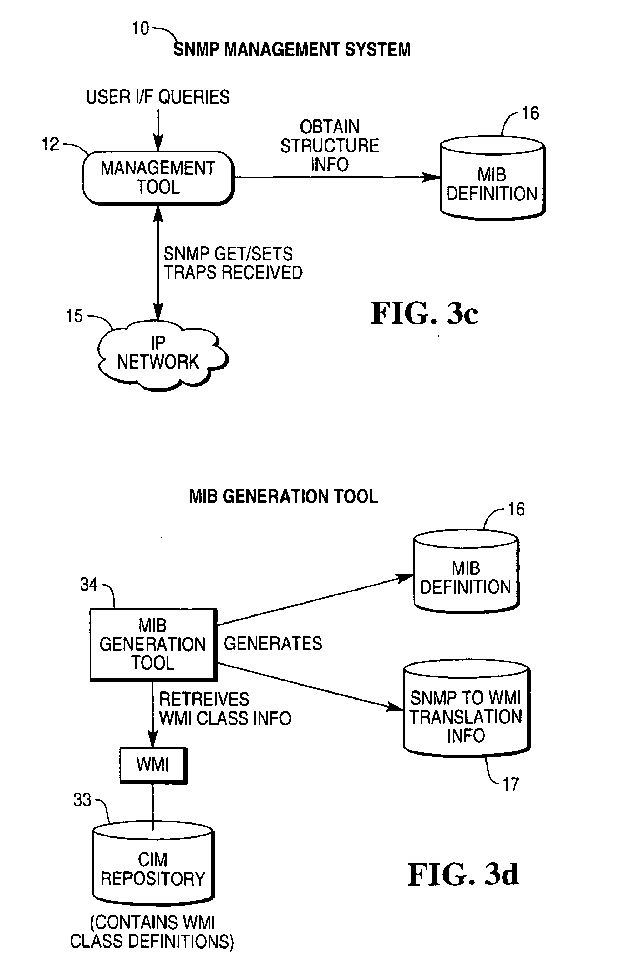

Figure 3c shows more detail of the SNMP management system 10 of Figure 3a. This SNMP management system 10 either comprises or is associated with a management tool 12. This management tool 12 is able to access a MIB 16 which has been created by a MIB generator tool (described below) using WMI class information. The management tool 12 is used to obtain current management information from the ATMs 38 and other managed devices as explained in more detail below.

Figure 3d shows a MIB generator tool 34 which created MIB 16 as mentioned above. The MIB stores management information using a tree based architecture as described above. The MIB generator tool 34 is able to access WMI class information from a CIM repository 33 where definitions of available WMI classes are stored as known in the art. The MIB generator tool also generates SNMP to WMI translation information 17 in a preferred embodiment.

As described above the present invention is concerned with translating the object relationship model used in WMI to a tree-based structure (such as an OID tree structure) that will expose all functionality to the remote SNMP management system 10. In order to achieve this a set of pre-specified WMI qualifiers are used as now described in more detail.

A qualifier is a data string that provides additional information about a class, instance, property, etc. Qualifiers may also include Flavors. Qualifier Flavors provide information about a qualifier, such as whether a derived class can over-ride the qualifiers' value. WMI defines a set of qualifiers with pre-defined meaning. Additional qualifiers can also be added for example the three pre-defined for use in the present invention (SNMPConcreteClass, SNMPPropertyOffset, SNMPMethodOffset).

As mentioned above WMI providers 30 are used to extract management information from managed devices or applications and to map that information into WMI object classes or CIM classes. The available types of CIM classes are pre-specified. That is, a developer pre-defines a set of CIM classes for describing one or more managed devices or applications. Any suitable tools for pre-defining the CIM classes can be used such as the managed object format (MOF) language or any other language for describing COM interfaces such as Interface Definition Language (IDL). The MOF language allows a developer to use a standard text editor to describe a set of CIM classes that in turn describe a managed object (also referred to as a managed device or application). These new classes can then be used to manage the associated device or application.

During this process of creating the CIM classes the developer instruments the new CIM class definitions with one or more pre-specified qualifiers. The following describes examples of such pre-specified qualifiers. This is done when new (or adapted) CIM classes are defined in a WMI MOF file or equivalent.

Examples of pre-specified WMI class qualifiers are now given. The actual names of the class qualifiers may be changed so that "SNMP ConcreteClass" for example could be replaced by another text string which represents a class that will be placed in the MIB.

### SNMP ConcreteClass

Each WMI class to be exposed in SNMP must include this qualifier.

### SNMPPropertyOffset

Each property associated with a class that it is desired to expose via SNMP is mapped using this qualifier to a column in a property table for that class. To ensure consistent interpretation and mapping of property to node this qualifier is use to specify how each property is ordered. That is, this qualifier is used to ensure that properties in sub-classes and superclasses are located in the same column order in the table even when new properties are added and the table is therefore updated.

### SNMPMethodOffset

Each method associated with a class that it is desired to expose via SNMP is mapped to a fixed OID node. To ensure consistent interpretation and mapping of method to nodes, this qualifier is introduced that specifies the OID used for each method. Each method node will contain a table, with an entry for each instance, which will allow access to the return value, parameters and execution.

After the developer completes the CIM class description, the MOF compiler registers the classes in the CIM repository 33 for subsequent client viewing.

### MIB Generator Tool (34 in Figure 3d)

The present invention also provides a MIB generator tool 34 which browses the WMI management information and builds an SNMP MIB structure 16 for all instrumented WMI classes. For example, this tool identifies all the class definitions in the CIM repository 33 which comprise the SNMPConcreteClass qualifier. Using those class definitions together with the pre-specified qualifiers associated with those classes the tool builds an OID structure. In addition this tool builds mapping information (such as a translation table) for use by an agent (see below) to map SNMP requests to WMI queries. For example this information is shown stored in database 17 in Figure 3d.

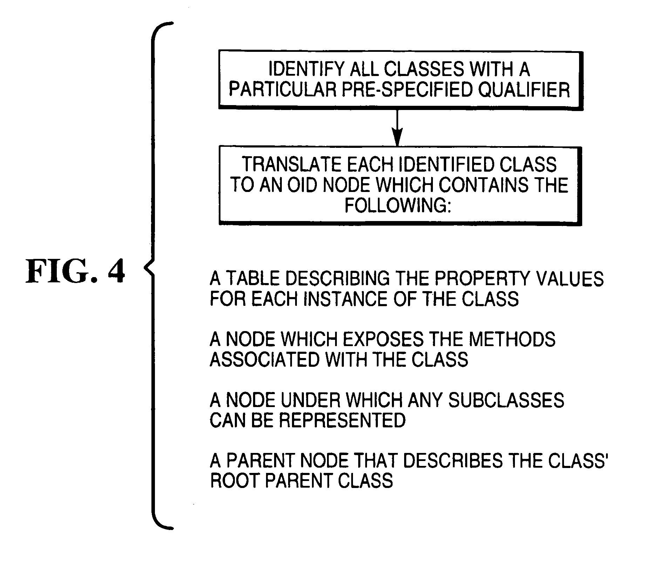

The method carried out by the MIB generator tool is represented at high level in Figure 4 and comprises the following steps:
Identify all classes with the qualifier SNMPConcreteClass;
Translate each identified class to an OID node which contains the following:

A table describing the property values for each instance of the class (this table is created on the basis of the SNMPPropertyOffset qualifier values.

A node which exposes the methods associated with the class. Each method is represented by a sub-node which contains a table that represents the parameters and return value for that method, as well as an "execute" column. This structure allows an WMI Class method to be invoked via SNMP without any knowledge of the method function or signature.

A node under which any subclasses can be represented. These subclasses will reflect the same property/ method/ subclass structure described above.

A parent node that describes the class' root parent class.

### Agent 35

As mentioned above both SNMP and WMI supply dynamic information about the managed entities. The present invention therefore also provides a modified type of SNMP agent which interworks with the MIB structure 16 created by the MIB generator tool 34 of the invention. This modified SNMP agent 35 has access to or comprises information about the mapping between WMI class and OID structure.

As mentioned above in the background section an SNMP agent is typically provided on each managed device or element 37 in an SNMP system. It acts to obtain management information from the device, map that information to SNMP format and make it available to the SNMP management system and MIB. Also to ensure that management information is obtained dynamically, when an SNMP network management system 10 requires current information, for example, about the status of particular devices, it uses the MIB 16 to send queries to the appropriate SNMP agents 37 and find the current information.

In the present invention the managed devices can be WMI managed systems 38 which do not necessarily provide management information via SNMP. Therefore it is necessary to use WMI providers 30 to obtain dynamic management information. In order to enable this the present invention uses agents 35 as illustrated in Figure 3b. Preferably each agent 35 resides locally on an ATM as a WMI client (using translation information 17. That is, one such agent 35 is provided at each WMI managed system 38. It receives SNMP commands from the SNMP network management system 10 (and MIB 16) and together with its knowledge 17 of the mapping is able to cause the WMI managed system 38 to obtain the required management information dynamically.

As mentioned above a MIB stores information about managed devices using a tree-based architecture. In an SNMP system this tree-based structure is formed using domain information about the managed devices. For example, information about a particular switch would be represented at a location in the tree-structure based on information about the type of switch involved. The tree structure used by SNMP can be used to represent the inheritance model of an object-oriented model. The present invention is particularly advantageous because it enables a MIB structure to be formed for WMI managed systems 38 without domain knowledge about those managed systems which would usually be necessary to form a MIB tree-structure. This is achieved by using the WMI class definitions themselves to form the MIB and by creating an agent 35 as described above which is able to manipulate the WMI classes represented in the MIB in order to obtain dynamic management information.

In the embodiment described above with reference to Figure 3b, an SNMP agent is provided locally at each ATM or other managed entity. However, it is also possible to use a single SNMP agent residing in the network rather than one at each managed entity. In this case the SNMP management system 10 makes SNMP requests to the central SNMP agent which forms the appropriate WMI queries and issues those to the managed entities. This is possible because WMI can be accessed remotely. This is not a typical configuration because the SNMP management system would usually expect to make SNMP requests directly to the network device being managed. However, although this configuration is not typical it is a workable solution that is encompassed by the present invention.

More detail about the MIB generator 34, the agent 35 and about the invention in general is now given.
- No domain-specific knowledge is required by the agent 35.
- All appropriate WMI Device or Application Management Class properties are defined in the MOF
- The agent has knowledge of the mapping between WMI Base Classes and the SNMP equivalent OID structure, and the mapping between WMI Event classes and the SNMP Trap equivalents.
- A fixed, core MIB file is defined which specifies the over-hanging MIB structure, the summary table, and the traps supported. This is adapted for self-service or non self-service environments as required.
- Beneath this is a MIB file per device (or application management function) which is generated dynamically from the WMI Class structures supported by that device or application. No device or application specific information is needed by the tool that creates these MIB files
- A MIB Generator tool is provided which uses the WMI interface to create MIB files defining the OID structure for that device. The device or application MOF file must have been previously compiled to be accessible via this interface. This MIB Generator tool ensures the rules defined for Qualifier use are complied with (see below).

The MIB tool bases the names of the tables, etc in the MIB on the source class, property and method names. Where required to by MIB compilation rules, the generator changes the case or adapts the names of source elements for example as indicated below. SNMP prefers these names to be unique. The following is an example of a naming convention that easily identifies and distinguishes class names from event names etc.
- Class Names are pre-pended with "an_"
- Table names are pre-pended with "the_"
- Property Names are pre-pended with "a_"
- Method Names & Method Parameters are pre-pended with "a_"
- In a preferred embodiment a Reference Manual is created although this is not essential. This Manual includes information on the set of values and their meaning that can be reported by devices, etc as well as the valid ranges for thresholds, method parameters, etc. This information is preferably not contained within the MIB. However, this information is preferably available to enable a mechanism of automatically compiling this information for generation of a Reference Manual. A mechanism (separate tool or plug-in) is provided to allow this automation, as known in the art.
- Each WMI class to be exposed via SNMP must have a property set that allows individual instances of these classes to be distinguished.
- Each WMI class to be exposed via SNMP must be allocated a unique identifying number. For example, the WMI class can contain a static property that uniquely identifies that class. When no such property exists, then the MIB generator can be configured to allocate an appropriate unique value.

### Use of Existing Qualifiers

A number of Qualifiers are required to support this approach. Each class property & method is represented in a table of some form. To ensure these tables can be ordered and information retrieved successfully, each WMI class must define a key set of properties.

### Class Qualifiers

Each concrete class is associated with the following example Qualifier
SNMPConcreteClass(uint16)

This qualifier indicates that the properties and methods associated with this class are to be included in the MIB structure. This restriction ensures that properties are not duplicated down the class inheritance tree structure. The parameter value specified defines the order of this class in relation to all other subclasses of the same type. For example, if a device has multiple subclasses of NCR_Task, then the offset determines the order in which they are allocated an OID in the resulting MIB structure.

### Property Qualifiers

Each property associated with a class is mapped to a column in the property table for this class. To ensure consistent interpretation & mapping of property to node, a further mandatory qualifier is introduced that specifies how each property is ordered
SNMPPropertyOffset(uint16)

The value specified defines the offset for the property in the column. When defining the properties for a subclass, the new properties for this class are added to the end of the table, after properties defined for the inherited class.

For example, class B inherits from class A. class A has 4 properties. Class B has two properties. The property table for class B has six columns. The class B property with qualifier SNMPPropertyOffset(1) will be the 5^{th} column in the table (i.e. 4 properties of Class A + 1).

### Method Qualifiers

Each method associated with a class is mapped to a fixed OID node. To ensure consistent interpretation & mapping of method to nodes, a further mandatory qualifier is introduced that specifies the OID used for each method
SNMPMethodOffset(uint16)

Each method node contains a table, with an entry for each instance, that allows access to the return value, parameters and execution.

Only properties and methods which have an associated qualifier will be reflected in the SNMP MIB. This means that properties and methods from the CIM base classes need not be exposed. Any CIM property or method that is to be used is re-defined in the base class MOF with the appropriate qualifier.

### OID Structure Description

An example OID structure is now described, based on a class set for a set of WMI classes that describe devices held in an ATM or kiosk. The following describes some of the background to this structure
- A new OID branch is introduced for the WMI classes that describe the devices.
- There are branches for each device class (MCRW, dispenser, etc), identified by that device's Unique Id.
- Below the Device Class branch there are further entries for representing each class associated with devices.
- Only concrete classes have property, method and qualifier sub-branches
- Each method table has a column corresponding to its parameters, return value and a cell to invoke execution. A column is also included which reports the UTC-formatted date of last execution time. If not executed yet then this date stamp will report the equivalent of 00:00, 1^{st} January 2000.
- Each associated WMI event is translated to an SNMP trap.
- To maintain a strongly typed interface, any subclass of the WMI Class hierarchy which introduces new properties or methods must contain appropriate Qualifier instrumentation in the MOF file to define how these can be accessed via the device-specific OID extension.
- Classes with array properties and methods with array parameters are handled as follows: the corresponding property or method table entry contains an Octet String which contains the array elements. When an array contains a complex type (such as strings) the Octect string contains an XML structure that describes each element of the array.

The rules encapsulated in the above structure, and the use of the qualifiers described above are encapsulated within the MIB Generator tool to ensure MOF & MIB compliance.

This means that the SNMP sub-agent (also referred to herein as the agent (35 in Figure 3b)) can, using run-time Qualifier information and knowledge of the expected tree structure, build up an OID to WMI Class instance relationship at start of day, and use this to translate SNMP get & sets to the corresponding WMI query. In another embodiment, the agent is able to use a mapping table that is previously generated by the MIB generator tool. The agent is therefore independent of the WMI class structure it will report and the agent can be configured to report any compatible WMI class set.

### WMI Events to SNMP Traps

Each WMI event can result in an SNMP Trap containing the corresponding information.

### SNMP Traps

One of the files generated defines the SNMP traps.

Device-specific or application-specific WMI Event subclasses are handled as follows: each trap includes a field which contains the name of the WMI event class which resulted in the Trap; a further field is included which contains an XML sequence which supports a series of key / value pairs. Each key will represent a property not directly supported by the Trap (i.e. a property introduced by an event subclass) and the value is its associated value.

The following is an example xml sequence when an event subclass occurs, where the class has three additional properties (Age, Address, Name) :-

```
          <?xml version="1.0" encoding="UTF-8"?>
          <root>
            <data name="Age">
               <value>38</value>
               <description>his age</description>
            </data>
            <data name="Address">
               <value>Tayport</value>
            </data>
            <data name="Name">
               <value>Gerard</value>
            </data>
          </root>
```

Note that if the event does not contain any additional properties then this event field will be empty.

### Agent Behaviour

All information is obtained directly from the underlying WMI Class. The agent requires knowledge of the mapping between WMI Base Classes and the SNMP equivalent OID structure, and the mapping between WMI Event classes and the SNMP Trap equivalents. An XML file is generated by the MIB generator that encapsulates all the information necessary for the Agent to translate an OID request to a WMI Class query. The XML file contains an entry for each OID table node. Each entry defines
- Base NCR WMI Class
- Leaf WMI Class
- Index Columns Set (for Method tables, this relates to associated Class Properties) - identifying the associate class property or method parameter
- Other Columns Set - same as above

A class interface is provided which is used by the Agent to query this information for a specified OID path.

This approach means that the Agent component with responsibility for translating the OID request to WMI Class query is generic and usable in all SNMP Agent Management scenarios.

## Claims

1. A system (10) for generating a management information base, MIB, said MIB comprising management information about WMI managed systems (38), said system (10) comprising:
(i) an input access arranged to definitions of WMI classes associated with said WMI managed systems (38) said definitions comprising one or more pre-specified qualifiers;
(ii) a processor (24) arranged to translate each accessed WMI class definition to an OID node in a tree-based structure forming at least part of the MIB on the basis of both the pre-specified qualifiers and a pre-specified set of rules,
wherein said pre-specified qualifiers comprise a particular class qualifier associated with each class to be defined in the MIB.

2. A system as claimed in claim 1, wherein said processor (24) is further arranged to operate without the need for domain knowledge about the WMI managed systems (38).

3. A system as claimed in claim 1 or claim 2, wherein the OID node comprises a properties table comprising property values for each instance of the WMI class.

4. A system as claimed in any of claims 1 to 3, wherein the OID node comprises a methods node which exposes the methods associated with the WMI class.

5. A system as claimed in claim 3 and claim 4, wherein said processor (24) is only arranged to form said properties table and said methods node when the WMI class has a particular pre-specified qualifiers.

6. A system as claimed in claim 4, wherein said methods node comprises a sub-node for each method to be represented each sub-node containing a table that represents any parameters and return values for the associated method as well as an execute column and information about timestamp of last invocation.

7. A system as claimed in any preceding claim, wherein the OID node comprises a subclass node under which any subclasses are represented.

8. A system as claimed in any preceding claim, wherein said pre-specfied qualifiers comprise a property qualifiers such that each property associated with a class is mapped to a column in a property table for that class using an offset specified by the property qualifier.

9. A system as claimed in any preceding claim, wherein said pre-specified qualifiers comprise a method qualifier which specifies an object identifier, OID, to be used for that method.

10. A method of generating a management information base, MIB, comprising management information about WMI managed systems (38), said method comprising the steps of:
(i) accessing definitions of WMI classes associated with said WMI managed systems (38) said definitions comprising one or more pre-specified qualifiers;
(ii) translating each accessed WMI class definition to an OID node in a tree-based structure forming at least part of the MIB on the basis of both pre-specfied qualifiers and a pre-specified set of rules,
wherein said pre-specified qualifiers comprise a particular class qualifier associated with each class to be defined in the MIB and arranged to indicate that properties and methods associated with that class will be populated.

11. A method as claimed in claim 10, which is carried out without the need for domain knowledge about the WMI managed systems (38).

12. A method as claimed in claim 10 or claim 11, wherein said step of translating comprises translating an accessed WMI class definition to an OID node which comprises a properties table comprising property values for each instance of that WMI class.

13. A method as claimed in any of claims 10 to 12, wherein said step of translating comprises translating an accessed WMI class definition to an OID node which comprises a methods node which exposes the methods associated with that WMI class.

14. A method as claimed in claim 12 and claim 13, wherein said step of translation is arranged to only form said properties table and methods node when the WMI class has a particular pre-specified qualifier.

15. A method as claimed in claim 13 , wherein said methods node comprises a sub-node for each method to be represented each sub-node containing a table that represents any parameters and return values for the associated method as well as an execute column and information about timestamp of last invocation.

16. A method as claimed in any of claims 10 to 15, wherein said step of translating comprises translating an accessed WMI class definition to an OID node which comprises a subclass node under which any subclasses are represented.

17. A method as claimed in any of claims 10 to 16, wherein said pre-specified qualifiers comprise a property qualifier such that each property associated with a class is mapped to a column in a property table for that class using an offset specified by the property qualifier.

18. A method as claimed in any of claims 10 to 17, wherein said pre-specified qualifiers comprise a method qualifier which specifies an object identifier, OID, to be used for that method.

## Patentansprüche

1. System (10) zur Erzeugung einer Management-Informationsbasis MIB, die Management-Informationen über WMI-geführte Systeme (38) umfasst, wobei das System (10) umfasst:
(i) einen Eingabezugang, der nach Definitionen von zu den WMI-geführten Systemen (38) gehörigen WMI-Klassen angeordnet ist, wobei die Definitionen einen oder mehrere vorab spezifizierte Kennzeichner umfassen;
(ii) einen Prozessor (24), der jede Definition einer WMI-Klasse, auf die zugegriffen wurde, in einen OID-Knoten in einer Struktur auf Baumbasis übersetzt, die mindestens einen Teil der MIB basierend sowohl auf den vorab spezifizierten Kennzeichnern als auch auf einer vorab spezifizierten Gruppe von Regeln bildet,
wobei die vorab spezifizierten Kennzeichner einen zu jeder in der MIB zu definierenden Klasse gehörigen besonderen Klassenkennzeichner umfassen.

2. System nach Anspruch 1, bei dem der Prozessor (24) ferner angeordnet ist, um ohne Bedarf an Domainkenntnis über die WMI-geführten Systeme (38) zu arbeiten.

3. System nach Anspruch 1 oder 2, bei dem der OID-Knoten eine Eigenschaftstabelle umfasst, die Eigenschaftswerte für jede Instanz der WMI-Klasse umfasst.

4. System nach einem der Ansprüche 1 bis 3, bei dem der OID-Knoten einen Methodenknoten umfasst, der die zu den WMI-Klassen gehörigen Methoden freilegt.

5. System nach Anspruch 3 und Anspruch 4, bei dem der Prozessor (24) nur angeordnet wird, um die Eigenschaftentabelle und den Methodenknoten zu bilden, wenn die WMI-Klasse einen besonderen vorab spezifizierten Kennzeichner aufweist.

6. System nach Anspruch 4, bei dem der Methodenknoten einen Unterknoten für jede darzustellende Methode umfasst, wobei jeder Unterknoten eine Tabelle enthält, die jegliche Parameter und Rückgabewerte für die dazugehörige Methode sowie eine Ausführungsspalte und Information über den Zeitstempel des letzten Aufrufs darstellt.

7. System nach einem der vorhergehenden Ansprüche, bei dem der OID-Knoten einen Unterklassenknoten umfasst, unter dem jede Unterklasse dargestellt ist.

8. System nach einem der vorhergehenden Ansprüche, bei dem die vorab spezifizierten Kennzeichner einen Eigenschaftskennzeichner umfassen, so dass jede zu einer Klasse gehörige Eigenschaft auf eine Spalte einer Eigenschaftstabelle für diese Klasse gemappt wird, indem ein durch den Eigenschaftskennzeichner spezifizierter Offset verwendet wird.

9. System nach einem der vorhergehenden Ansprüche, bei dem die vorab spezifizierten Kennzeichner einen Methodenkennzeichner umfassen, der einen Objektbezeichner, OID, spezifiziert, der für diese Methode verwendet werden soll.

10. Verfahren zur Erzeugung einer Management-Informationsbasis MIB, die Management-Informationen über WMI-geführte Systeme (38) umfasst, wobei das Verfahren die Schritte umfasst:
(i) Zugang zu Definitionen von zu den WMI-geführten Systemen (38) gehörigen WMI-Klassen, wobei die Definitionen einen oder mehrere vorab spezifizierte Kennzeichner umfassen;
(ii) Übersetzen jeder Definition einer WMI-Klasse, auf die zugegriffen wurde, in einen OID-Knoten in einer Struktur auf Baumbasis, die mindestens einen Teil der MIB basierend sowohl auf den vorab spezifizierten Kennzeichnern als auch auf einer vorab spezifizierten Gruppe von Regeln bildet,
wobei die vorab spezifizierten Kennzeichner einen zu jeder in der MIB zu definierenden Klasse gehörigen, besonderen Klassenkennzeichner umfassen, der angeordnet ist, um anzuzeigen, dass zu dieser Klasse gehörige Eigenschaften und Methoden bestückt werden.

11. Verfahren nach Anspruch 10, das ohne Bedarf an Domainkenntnis über die WMI-geführten Systeme (38) ausgeführt wird.

12. Verfahren nach Anspruch 10 oder Anspruch 11, bei dem der Schritt des Übersetzens das Übersetzen einer WMI-Klassendefinition, auf die zugegriffen wurde, in einen OID-Knoten umfasst, der eine Eigenschaftstabelle umfasst, die die Eigenschaftswerte für jede Instanz dieser WMI-Klasse umfasst.

13. Verfahren nach einem der Ansprüche 10 bis 12, bei dem der Schritt des Übersetzens das Übersetzen einer WMI-Klassendefinition, auf die zugegriffen wurde, in einen OID-Knoten umfasst, der einen Methodenknoten umfasst, der die zu diesen WMI-Klassen gehörigen Methoden freilegt.

14. Verfahren nach Anspruch 12 und Anspruch 13, bei dem der Schritt des Übersetzens nur angeordnet wird, um die Eigenschaftentabelle und den Methodenknoten zu bilden, wenn die WMI-Klasse einen besonderen vorab spezifizierten Kennzeichner aufweist.

15. Verfahren nach Anspruch 13, bei dem der Methodenknoten einen Unterknoten für jede darzustellende Methode umfasst, wobei jeder Unterknoten eine Tabelle enthält, die jegliche Parameter und Rückgabewerte für die dazugehörige Methode sowie eine Ausführungsspalte und Information über den Zeitstempel des letzten Aufrufs darstellt.

16. Verfahren nach einem der Ansprüche 10 bis 15, bei dem der Schritt des Übersetzens das Übersetzen einer WMI-Klassendefinition, auf die zugegriffen wurde, in einen OID-Knoten umfasst, der einen Unterklassenknoten umfasst, unter dem jede Unterklasse dargestellt wird.

17. Verfahren nach einem der Ansprüche 10 bis 16, bei dem die vorab spezifizierten Kennzeichner einen Eigenschaftskennzeichner umfassen, so dass jede zu einer Klasse gehörige Eigenschaft auf eine Spalte einer Eigenschaftstabelle für diese Klasse gemappt wird, indem ein durch den Eigenschaftskennzeichner spezifizierter Offset verwendet wird.

18. Verfahren nach einem der Ansprüche 10 bis 17, bei dem die vorab spezifizierten Kennzeichner einen Methodenkennzeichner umfassen, der einen Objektbezeichner, OID, spezifiziert, der für diese Methode verwendet werden soll.

## Revendications

1. Système ( 10 ) de production d'une base d'information de gestion, MIB, la MIB comprenant une information de gestion sur des systèmes ( 38 ) gérés par WMI, le système ( 10 ) comprenant :
(i) un accès d'entrée agencé pour des définitions de classes WMI associées aux systèmes ( 38 ) gérés par WMI, ces définitions comprenant un ou plusieurs qualificatifs spécifiés à l'avance ;
(ii) un processeur (24 ) conçu pour translater chaque définition de classe WMI à laquelle on a accédé à un noeud OID dans une structure arborescente formant au moins une partie de la MIB sur la base à la fois des qualificatifs spécifiés à l'avance et d'un jeu de règles spécifié à l'avance,
dans lequel les qualificatifs spécifiés à l'avance comprennent un qualificatif particulier de classe associé à chaque classe à définir dans la MIB.

2. Système suivant la revendication 1, dans lequel le processeur ( 24 ) est conçu, en outre, pour fonctionner sans le besoin de connaissance de domaine sur les systèmes ( 38 ) gérés par WMI.

3. Système suivant la revendication 1 ou revendication 2, dans lequel le noeud OID comprend une table de propriétés comprenant des valeurs de propriété pour chaque instance de la classe WMI.

4. Système suivant l'une quelconque des revendications 1 à 3, dans lequel le noeud OID comprend un noeud de procédés qui expose les procédés associés à la classe WMI.

5. Système suivant la revendication 3 et revendication 4, dans lequel le processeur ( 24 ) est conçu seulement pour former la table de propriétés et le noeud de procédés lorsque la classe WMI a un qualificatif particulier spécifié à l'avance.

6. Système suivant la revendication 4, dans lequel le noeud de procédés comprend un sous-noeud pour chaque procédé à représenter, chaque sous-noeud contenant une table qui représente tous paramètres et valeurs de retour pour le procédé associé ainsi qu'une colonne d'exécution et une information sur l'horodatage de la dernière exécution.

7. Système suivant l'une quelconque des revendications précédentes, dans lequel le noeud OID comprend un noeud de sous-classe sous lequel sont représentées les sous-classes.

8. Système suivant l'une quelconque des revendications précédentes, dans lequel les qualificatifs spécifiés à l'avance comprennent un qualificatif de propriété tel que chaque propriété associée à une classe est en correspondance avec une colonne d'une table de propriété pour cette classe utilisant un décalage spécifié par le qualificatif de propriété.

9. Système suivant l'une quelconque des revendications précédentes, dans lequel les qualificatifs spécifiés à l'avance comprennent un qualificatif de procédé qui spécifie un identificateur d'objet, OID, à utiliser pour ce procédé.

10. Procédé de production d'une base d'information de gestion, MIB, comprenant une information de gestion sur des systèmes ( 38 ) gérés par WMI, le procédé comprenant les stades dans lesquels :
(i) on accède à des définitions de classes WMI associées aux systèmes ( 38 ) gérés par WMI, les définitions comprenant un ou plusieurs qualificatifs spécifiés à l'avance ;
(ii) on translate chaque définition de classe WMI à laquelle on a accédé à un noeud OID dans une structure arborescente formant au moins une partie de la MIB sur la base à la fois des qualificatifs spécifiés à l'avance et d'un jeu de règles spécifié à l'avance,
dans lequel les qualificateurs spécifiés à l'avance comprennent un qualificateur particulier de classe associé à chaque classe à définir dans la MIB et conçu pour indiquer que les propriétés et procédés associés à cette classe seront peuplés.

11. Procédé suivant la revendication 10, qui est effectué sans le besoin de connaissance de domaine sur les systèmes ( 38 ) gérés par WMI.

12. Procédé suivant la revendication 10 ou la revendication 11, dans lequel le stade de translation comprend la translation d'une définition de classe WMI, à laquelle on a accédé, à un noeud OID qui comprend une table de propriétés comprenant des valeurs de propriétés pour chaque instance de cette classe WMI.

13. Procédé suivant l'une quelconque des revendications 10 à 12, dans lequel le stade de translation comprend la translation d'une définition de classe WMI, à laquelle on a accédé, à un noeud OID qui comprend un noeud de procédés qui expose les procédés associés à cette classe WMI.

14. Procédé suivant les revendications 12 et 13, dans lequel le stade de translation est conçu pour former seulement la table de propriétés et le noeud de procédés lorsque la classe WMI a un qualificatif particulier spécifié à l'avance.

15. Procédé suivant la revendication 13, dans lequel le noeud de procédés comprend un sous-noeud pour chaque procédé à représenter, chaque sous-noeud contenant une table qui représente tout paramètre et valeur de retour pour le procédé associé ainsi qu'une colonne d'exécution et une information sur l'horodatage de la dernière exécution.

16. Procédé suivant l'une quelconque des revendications 10 à 15, dans lequel le stade de translation comprend la translation d'une définition de classe WMI, à laquelle on a accédé, à un noeud OID qui comprend un noeud de sous-classe sous lequel toutes les sous-classes sont représentées.

17. Procédé suivant l'une quelconque des revendications 10 à 16, dans lequel les qualificatifs spécifiés à l'avance comprennent un qualificatif de propriété tel que chaque propriété associée à une classe est en correspondance avec une colonne d'une table de propriété pour cette classe utilisant un décalage spécifié par le qualificatif de propriété.

18. Procédé suivant l'une quelconque des revendications 10 à 17, dans lequel les qualificatifs spécifiés à l'avance comprennent un qualificatif de procédé qui spécifie un identificateur d'objet, OID, à utiliser pour ce procédé.
